# EUROPEAN PATENT APPLICATION

(11) **EP 4 815 341 A1**
(43) Date of publication of application: **30.09.2026**
(21) Application number: 24918763.4
(22) Date of filing: 15.01.2024
(51) Int. Cl.: H04B 10/61

(54) **OPTICAL RECEIVER, OPTICAL RECEPTION METHOD, OPTICAL RECEPTION PROGRAM, AND RECORDING MEDIUM**

(71) Applicant: Mitsubishi Electric Corporation, Tokyo 100-8310 (JP)
(72) Inventor: SANO, Hayato, Tokyo 100-8310 (JP); YOSHIDA, Tsuyoshi, Tokyo 100-8310 (JP)
(74) Representative: Plasseraud IP
(86) International application number: PCT/JP2024/000712
(87) International publication number: WO 2025/154115

(57) **Abstract**

An optical receiver includes: an optical coherent detecting unit (210) to receive modulated light optically modulated at a carrier wave frequency, cause the received modulated light to interfere with interference light to perform coherent detection, and output an analog electrical signal; an analog-to-digital converting unit (230) to perform analog-to-digital conversion on the analog electrical signal from the optical coherent detecting unit (210), and obtain a digital signal; and a reception side digital signal processing unit (240) including a frequency shifting unit (241) to perform coarse compensation of shifting a center frequency of the digital signal obtained by the analog-to-digital converting unit (230) to a frequency that reduces a frequency difference between transmission and reception, and a frequency difference estimating and compensating unit (243) to perform precise compensation on the center frequency of the digital signal subjected to the coarse compensation of the frequency difference by the frequency shifting unit (241).

## Description

### TECHNICAL FIELD

The present disclosure relates to an optical receiver and an optical reception method used for digital coherent optical communication.

### BACKGROUND ART

In the optical fiber communication field, a digital coherent technique is widely applied to metro core networks and optical submarine cable systems.

Digital coherent optical communication is becoming increasingly popular since 2010s, and, with its progress, it has been studied in recent years to apply digital coherent optical communication to satellite-mounted optical communication terminals as well as optical fiber networks on the ground.

To address such sophistication of optical networks, a single optical transceiver of a digital coherent system can generate, in a digital domain, a plurality of subcarrier signals that do not interfere with each other on the frequency axis, and can achieve hardware utilization efficiency and space saving by allocating different information to each subcarrier and simultaneously accommodating various services.

A digital coherent optical communication technique that can transmit and receive such subcarrier signals is described in Non-Patent Literature 1.

### CITATION LIST

### NON-PATENT LITERATURE

Non-Patent Literature 1: H. Sun et al, "800G DSP ASIC Design Using Probabilistic Shaping and Digital Sub-Carrier Multiplexing", JOURNAL OF LIGHTWAVE TECHNOLOGY, VOL. 38, NO. 17, SEPTEMBER 1, 2020, p.p.4744-4756

### SUMMARY OF INVENTION

### TECHNICAL PROBLEM

An optical reception device described in Non-Patent Literature 1 converts a voltage signal that is detected by optical coherent detection and is output into a digital signal by an Analog-to-Digital Converter (ADC).

When a sampling rate of the ADC is high, it is possible to accurately acquire a pre-analog-to-digital conversion analog received signal in wider frequency space, and consequently precisely perform waveform distortion compensation in digital signal processing and improve signal quality after reception.

However, in a case where a low or middle-speed digital coherent signal is handled in an optical receiver, such as when, for example, a Field Programmable Gate Array (FPGA) having a sampling rate or a throughput on the order of several gigahertz is used for digital signal processing, or when, for example, a modulation rate of each subcarrier is low due to a subcarrier multiplexing scheme, if there is a frequency difference between optical carrier waves of transmission and reception, the waveform distortion compensation capability in reception side digital signal processing is degraded.

Particularly when there is a great frequency difference between optical carrier waves of transmission and reception, a waveform cannot be correctly represented, and it may be difficult to perform waveform distortion compensation as a result.

The present disclosure has been made in light of the above point, and an object of the present disclosure is to provide an optical receiver that, even when a frequency difference occurs between optical carrier waves of transmission and reception, can compensate for the frequency difference between the optical carrier waves of transmission and reception.

### SOLUTION TO PROBLEM

An optical receiver according to the present disclosure includes: an optical coherent detecting unit to receive modulated light optically modulated at a carrier wave frequency, cause the received modulated light to interfere with interference light to perform coherent detection, and output an analog electrical signal; an analog-to-digital converting unit to obtain a digital signal by performing analog-to-digital conversion on the analog electrical signal from the optical coherent detecting unit; and a reception side digital signal processing unit including a frequency shifting unit to perform coarse compensation of shifting a center frequency of the digital signal obtained by the analog-to-digital converting unit to a frequency that reduces a frequency difference between transmission and reception, and a frequency difference estimating and compensating unit to perform precise compensation on the center frequency of the digital signal subjected to the coarse compensation of the frequency difference by the frequency shifting unit.

### ADVANTAGEOUS EFFECTS OF INVENTION

According to the present disclosure, it is possible to perform waveform distortion compensation even when, for example, a frequency difference occurs between optical carrier waves of transmission and reception.

### BRIEF DESCRIPTION OF DRAWINGS

FIG. 1 is a block diagram illustrating an optical transmitting and receiving device including an optical receiver according to Embodiment 1.
FIG. 2 is a block diagram illustrating a reception side digital signal processing unit of the optical receiver according to Embodiment 1.
FIG. 3 is a diagram illustrating an example of a relationship between frequencies of optical carrier waves of transmission and reception of a digital coherent system (an estimation value of a frequency difference is within an allowable range).
FIG. 4 is a diagram illustrating a frequency (signal spectrum) of a digital signal that is to be input to a reception side DSP and is obtained by an ADC unit in a case where optical carrier waves of transmission and reception have the relationship in FIG. 3.
FIG. 5 is a diagram illustrating another example of a relationship between frequencies of optical carrier waves of transmission and reception in the digital coherent system (an estimation value of a frequency difference is outside the allowable range and within a compensable range).
FIG. 6 is a diagram illustrating a frequency (signal spectrum) of a digital signal that is to be input to the reception side DSP and is obtained by the ADC unit in a case where optical carrier waves of transmission and reception have the relationship in FIG. 5.
FIG. 7 is a diagram illustrating coarse compensation of a frequency (signal spectrum) of a digital signal to be input to a reception side DSP 240 in the optical receiver according to Embodiment 1.
FIG. 8 is a diagram illustrating a frequency difference on an IQ signal plane space in which a frequency difference between transmission and reception can be compensated.
FIG. 9 is a diagram illustrating a frequency difference on the IQ signal plane space in which a frequency difference between transmission and reception cannot be compensated.
FIG. 10 is a flowchart illustrating operations of a frequency shifting unit 241 and a frequency shift controlling unit 246 for an estimation value of a frequency difference obtained by a frequency difference estimating and compensating unit 243 of the optical receiver according to Embodiment 1.
FIG. 11 is a diagram schematically describing a transition of the estimation value of the frequency difference between transmission and reception accompanying a lapse of time in the optical receiver according to Embodiment 1.
FIG. 12 is a diagram schematically illustrating an example where the estimation value of the frequency difference between transmission and reception is within the allowable range in the optical receiver according to Embodiment 1.
FIG. 13 is a diagram schematically illustrating an example for describing coarse compensation in a case where the estimation value of the frequency difference between transmission and reception deviates from the allowable range to a positive (+) side in the optical receiver according to Embodiment 1.
FIG. 14 is a diagram schematically illustrating an example for describing coarse compensation in a case where the estimation value of the frequency difference between transmission and reception deviates from the allowable range to a negative (-) side in the optical receiver according to Embodiment 1.
FIG. 15 is a diagram illustrating a hardware configuration of an optical receiver according to Embodiment 1.
FIG. 16 is a block diagram illustrating a reception side digital signal processing unit of an optical receiver according to Embodiment 2.
FIG. 17 is a block diagram illustrating a reception side digital signal processing unit of an optical receiver according to Embodiment 3.
FIG. 18 is a block diagram illustrating another example of the reception side digital signal processing unit of the optical receiver according to Embodiment 3.
FIG. 19 is a block diagram illustrating a reception side digital signal processing unit of an optical receiver according to Embodiment 4.
FIG. 20 is a diagram illustrating on a frequency axis a subcarrier signal of a subcarrier multiplexing scheme of the digital coherent system.

### DESCRIPTION OF EMBODIMENTS

### Embodiment 1.

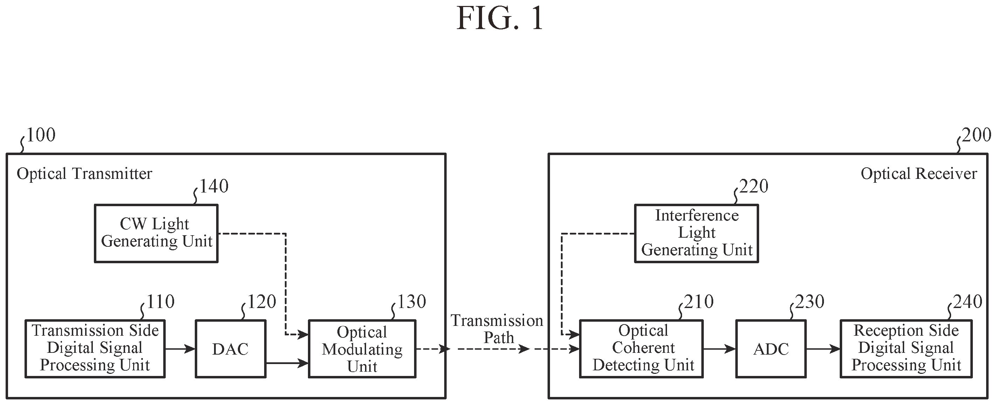

An optical transmitting and receiving device including an optical receiver according to Embodiment 1 will be described with reference to FIGS. 1 to 15.

In FIG. 1, broken line arrows indicate flows of optical signals, and solid line arrows indicate flows of electrical signals.

The optical transmitting and receiving device including the optical receiver according to Embodiment 1 is a device that focuses on a transmission function and a reception function of a communication device and an optical transceiver that controls transmission and reception of optical signals in: an optical communication network that uses as a transmission medium an optical fiber in an optical access and optical core metro core network: and an optical communication network of space and optical space communication or the like that does not use, as a transmission medium, an optical fiber but uses wireless space assumed for a mobile object such as a satellite.

In an optical reception device including the optical receiver according to Embodiment 1, an optical transmitter and a control device that controls the optical transmitter are included in the same housing together with the optical transmitter and the optical receiver in an actual system.

A case where an optical transmitting and receiving device in an optical communication system that uses low and middle-speed digital coherent signals of less than 100 Gbps is applied as the optical transmitting and receiving device including the optical receiver according to Embodiment 1 will be described below.

In this regard, it is not limited to the case where the low and middle-speed digital coherent signals of less than 100 Gbps is used, and a case, as a method that can compensate for a wide frequency difference, an optical transmitting and receiving device in an optical communication system that uses a high-speed digital coherent signal of 100 Gbps or more can be applied.

The optical transmitting and receiving device including the optical receiver according to Embodiment 1 is applied to an optical transmitting and receiving device that transmits and receives a digital coherent signal, which is an optical signal using orthogonality of phases , such as polarization multiplexed Binary Phase Shift Keying (BPSK), Quadrature Phase Shift Keying (QPSK), Quadrature Amplitude Modulation (QAM), or the like in a digital coherent system.

In the following description, in the optical transmitting and receiving device including the optical receiver according to Embodiment 1, a polarization multiplexing digital coherent system, which is common for an optical fiber network, assumes that an optical signal in which an optical signal are polarization- multiplexed by the digital coherent system using an X polarized wave and a Y polarized wave, and each of the X polarized wave and the Y polarized wave is modulated to an I signal and a Q signal of quadrature phases, respectively. For example, the X polarized wave is a horizontally polarized wave, and a Y polarized wave is a vertically polarized wave.

That is, in the optical transmitting and receiving device that supports polarization multiplexed QPSK or QAM, a polarization-multiplexed digital coherent signal is used, which is distinguished into the I signal (XI signal) in the X polarized wave, the Q signal (XQ signal) in the X polarized wave, the I signal (YI signal) in the Y polarized wave, and the Q signal (YQ signal) in the Y polarized wave.

Note that, while terminals (an XI output terminal, an XQ output terminal, a YI output terminal, and a YQ output terminal) corresponding to the XI signal, the XQ signal, the YI signal, and the YQ signal, respectively, and lanes (an XI lane, an XQ lane, a YI lane, and a YQ lane) through which electrical signals of the XI signal, the XQ signal, the YI signal, and the YQ signal respectively flow are distinguished from each other, they are collectively illustrated, that is, are illustrated as a single path in the drawings.

Furthermore, the present disclosure may be applied to the optical transmitting and receiving device that transmits and receives a single-polarization digital coherent signal that is not subjected to polarization multiplexing, that is, an optical signal modulated into the I signal and the Q signal of the quadrature phases, even in the case of a single-polarization digital coherent system, the present disclosure is also applicable similarly to a polarization-multiplexing digital coherent system.

Accordingly, since the single-polarization digital coherent system can also be described without being distinguished from polarization multiplexing digital coherent system, description of the single-polarization digital coherent system will be omitted in the following description.

As illustrated in FIG. 1, the optical transmitting and receiving device includes an optical transmitter 100, an optical receiver 200, and an optical transceiver controlling unit (not illustrated).

The optical transmitter 100, the optical receiver 200, and the optical transceiver controlling unit are built in the same housing.

Because a generally known device is used for the optical transmitter 100, the optical transmitter 100 will be briefly described.

The optical transmitter 100 includes a modulated signal generating unit 110, a Digital-to-Analog Converter (DAC) unit 120 that is a digital-to-analog converter, an optical modulating unit 130, and a Continuous Wave (CW) light generating unit 140.

The modulated signal generating unit 110 is a transmission side digital signal processing unit (that is transmission Digital Signal Processor (DSP)), and will be hereinafter referred to as the transmission side DSP 110.

The transmission side DSP 110 receives as a digital signal an input of data that is information to be sent to a destination, a symbol signal is inserted in the input data, and the transmission side DSP 110 generates a modulated signal that is a digital signal suitable for a transmission path and used for optical modulation.

The modulated signal is a time-series signal that is expressed by one sample or a plurality of samples per symbol.

Data that to be transmitted is constructed by the transmission side DSP 110 as a frame in a signal form for which error correction can be performed.

The transmission side DSP 110 generates four modulated signals of the XI signal, the XQ signal, the YI signal, and the YQ signal in a case of the polarization multiplexing digital coherent system.

The transmission side DSP 110 generates two modulated signals of the I signal and the Q signal in a case of the single-polarization digital coherent system.

In the optical transmitting and receiving device, each modulated signal is processed in a similar manner, one modulated signal will be described below without distinguishing each modulated signal.

The DAC unit 120 converts a modulated signal formed of a digital signal into a modulated signal formed of an analog signal.

The DAC unit 120 uses a digital-to-analog converter of two giga samples/second for a symbol rate of one gigabaud (Gbaud) when, for example, one symbol is represented by two samples in a digital domain.

The optical modulating unit 130 modulates CW light from the CW light generating unit 140 on the basis the modulated signal converted into the analog signal by the DAC unit 120, generates modulated light, and outputs the generated modulated light to the transmission path.

The modulated light is an optical signal that is a digital coherent signal in which information by the modulated signal is superimposed on the CW light.

Information by modulated signals output from the independent lanes is mixed in the modulated light.

The CW light from the CW light generating unit 140 is a single carrier signal of the digital coherent system, and is continuous light having a single carrier wave frequency f_{Tx0}.

As illustrated in FIG. 1, the optical receiver 200 includes an optical coherent detecting unit 210, an interference light (Local Oscillator (LO) light) generating unit 220, an Analog-to-Digital Converter (ADC) unit 230 that is an analog-to-digital converter, and a reception side digital signal processing unit 240.

The reception side digital signal processing unit 240 is a reception Digital Signal Processing (DSP), and will be hereinafter referred to as the reception side DSP 240.

The optical coherent detecting unit 210 performs optical coherent detection of receiving modulated light transmitted from an optical transmitter of another optical transmitting and receiving device through the transmission path, causing the received modulated light to interfere with interference light that is continuous light having a single carrier wave frequency f_{Rx} from the interference light generating unit 220, and outputting an analog electrical signal that is based on a voltage obtained by photoelectrically converting the optical signal obtained by the interference. A voltage signal output from the optical coherent detecting unit 210 is a single end output or a differential output.

The analog electrical signals output from the optical coherent detecting unit 210 are four signals of the XI signal, the XQ signal, the YI signal, and the YQ signal that are output from the four output terminals in a case of the polarization multiplexing digital coherent system, and are two signals of the I signal and the Q signal in a case of the single-polarization digital coherent system.

In this regard, due to polarization rotation or the like that actually occurs during transmission by an optical fiber, the four analog electrical signals of the XI signal, the XQ signal, the YI signal, and the YQ signal output from the independent lanes on the transmission side are mixed, and the four analog electrical signals are digitally converted by the ADC unit 230, and demodulated by being restored by the reception side DSP 240.

Furthermore, also in the case of the single-polarization digital coherent system, the optical coherent detecting unit 210 performs coherent detection on the input modulated light, and outputs the modulated light as the four analog electrical signals.

The analog electrical signals of the I signal and the Q signal among the four analog electrical signals are digitally converted by the ADC unit 230, and then are demodulated to single-polarization signals by the reception side DSP 240.

Furthermore, when the I signal and the Q signal can be directly obtained by being input in the same polarized state as that of the modulated light in the optical coherent detecting unit 210, the two analog electrical signals are digitally converted by the ADC unit 230, and then are demodulated as single-polarization signals by the reception side DSP 240.

Each analog electrical signal is a pre-modulation signal that is an analog voltage signal obtained by the optical coherent detecting unit 210 by causing each modulated light optically modulated at the carrier wave frequency and the interference light having the carrier wave frequency f_{Rx} to optically interfere. The pre-modulation signal is a signal for obtaining a demodulated signal by the reception side DSP 240.

Although each pre-demodulation signal and the four signals of the XI signal, the XQ signal, the YI signal, and the YQ signal are each processed in the optical transmitting and receiving device in Embodiment 1, each signal is processed by similar processing, and one pre-modulation signal will be described below without distinguishing between pre-modulation signals.

The carrier wave frequency f_{Rx} of the interference light from the interference light generating unit 220 is the substantially same frequency as the carrier wave frequency f_{Tx} of the modulated light received by the optical coherent detecting unit 210.

The carrier wave frequency f_{Tx} and the carrier wave frequency f_{Rx} are, for example, substantially 193.1 THz.

The carrier wave frequency f_{Rx} of the interference light from the interference light generating unit 220 is the same as the carrier wave frequency f_{Tx0}, or has a frequency difference from the carrier wave frequency f_{Tx0} of the CW light from the CW light generating unit 140 in the optical transmitter of the other optical transmitting and receiving device.

Note that the CW light from the CW light generating unit 140 in the optical transmitter of the other optical transmitting and receiving device will be described simply as the CW light from the CW light generating unit 140 because explanation will be complicated in the following description.

Even when the carrier wave frequency f_{Rx} of the interference light from the interference light generating unit 220 and the carrier wave frequency f_{Tx0} of the CW light from the CW light generating unit 140 are the same, aging of a light source of the interference light generating unit 220 or occurrence of great Doppler shift due to an orbit state between satellites produces a frequency difference between the carrier wave frequency of the modulated light received by the optical coherent detecting unit 210 and the carrier wave frequency f_{Rx} of the interference light from the interference light generating unit 220.

Furthermore, when there is the frequency difference between the carrier wave frequency f_{Rx} of the interference light from the interference light generating unit 220 and the carrier wave frequency f_{Tx} of the CW light from the CW light generating unit 140, there is the frequency difference between the carrier wave frequency of the modulated light received by the optical coherent detecting unit 210 and the carrier wave frequency f_{Rx} of the interference light from the interference light generating unit 220.

Any frequency difference will be referred to as a frequency difference between the frequency of the CW light from the CW light generating unit 140 and the frequency of the interference light from the interference light generating unit 220, and will be described simply as a frequency difference between transmission and reception.

Furthermore, the frequency difference between transmission and reception is a value for which the carrier wave frequency f_{Rx} of the interference light from the interference light generating unit 220 serves as a reference, takes positive or negative, and will be described as an absolute value in the following description unless it is necessary.

The ADC unit 230 samples the input analog-domain electrical signal on the basis of a sampling frequency indicating a high sampling rate that accompanies a high-speed modulation rate equal to or more than 25 GBaud in a case of the QPSK scheme when the carrier wave frequency f_{Tx} is approximately 100 Gbps, converts the electrical signal into digital signal that is a digital-domain discrete signal, and obtains a pre-modulation signal formed of a digital signal.

The sampling rate of the ADC unit 230 is higher than a sampling rate of the frequency difference estimating and compensating unit 243 of the reception side DSP 240.

The pre-modulation signal sent from the ADC unit 230 to the reception side DSP 240 is a time-series signal in a high sampling rate condition.

A pre-modulation digital signal from the ADC unit 230 is a signal processed in a digital frequency domain of a wide band.

The reception side DSP 240 performs frequency difference coarse compensation of shifting the pre-modulation signal from the ADC unit 230 to a frequency that reduces a frequency difference Δf between transmission and reception, performs precise compensation on the frequency of the digital signal subjected to the frequency difference coarse compensation, and obtains the pre-modulation signal as a demodulated signal.

The reception side DSP 240 performs digital signal processing of the digital coherent system in Embodiment 1.

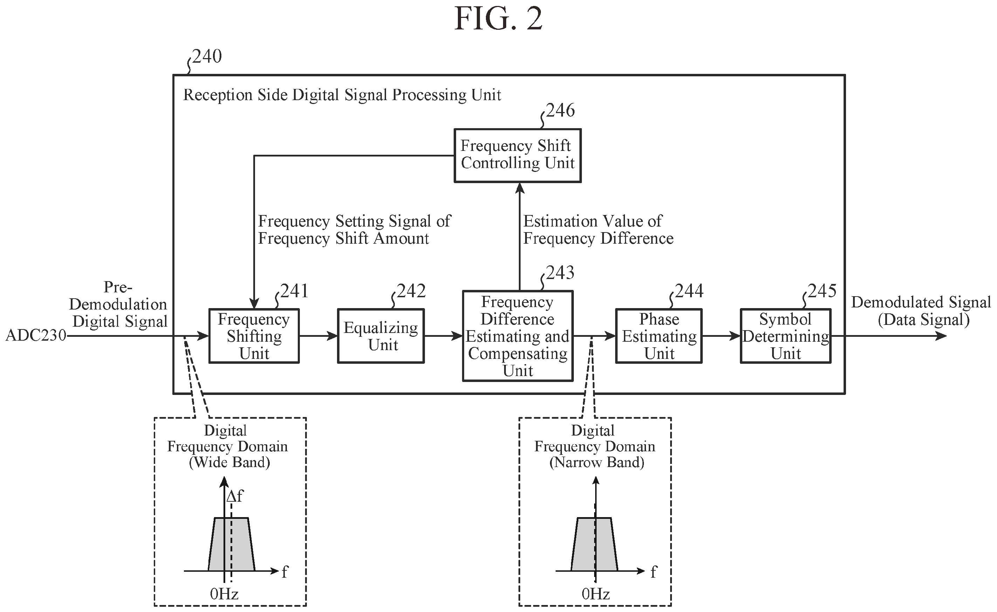

As illustrated in FIG. 2, the reception side DSP 240 includes a frequency shifting unit 241, an equalizing unit 242, a frequency difference estimating and compensating unit 243, a phase estimating unit 244, a symbol determining unit 245, and a frequency shift controlling unit 246.

The frequency shifting unit 241 performs frequency difference coarse compensation of shifting the digital signal obtained by the ADC unit 230 to a frequency that reduces an estimation value Δf of the frequency difference between transmission and reception.

The coarse compensation in the frequency shifting unit 241 is compensation performed by shifting the center frequency of the digital signal obtained by the ADC unit 230 in such a way that, at a time of deviation from an allowable range of the estimation value Δf of the frequency difference between the transmission and the reception in which the frequency difference estimating and compensating unit 243 can allow the precise compensation, the estimation value Δf of the frequency difference between the transmission and the reception falls within the allowable range.

As is generally known, the estimation value Δf of the frequency difference between transmission and reception is estimated on the basis of a frequency of phase rotation of a signal plane space point that is based on the frequency difference on the IQ signal plane space in the frequency difference estimating and compensating unit 243.

By receiving a frequency setting signal of the frequency shift controlling unit 246, obtaining a sine wave for frequency shift on the basis of the frequency setting signal, and multiplying the obtained sine wave on the digital signal obtained by the ADC unit 230 in the time domain, the frequency shifting unit 241 shifts the center frequency of the digital signal in such a direction that the center frequency is 0 Hz with respect to the frequency axis.

In other words, the center frequency is shifted in such a direction that the estimation value Δf of the frequency difference between transmission and reception is 0 Hz.

The frequency shifting unit 241 has a function of receiving the frequency setting signal of the frequency shift controlling unit 246, and giving the sine wave for frequency shift to the digital signal obtained by the ADC unit 230.

The frequency shifting unit 241 sets as an initial setting value the center frequency of the digital signal obtained by the ADC unit 230 by being shifted by the frequency difference between the carrier wave frequency f_{Rx} of the interference light from the interference light generating unit 220 and the carrier wave frequency f_{Tx} of the CW light, or a frequency obtained by being shifted by a fixed value from this frequency difference so as to fall within the allowable range of precise compensation of the frequency difference estimating and compensating unit 243 at a time of start of communication.

The estimation value Δf of the frequency difference between transmission and reception for the initial setting value is preferably close to 0 Hz, and the initial setting value is set to the frequency at which the estimation value Δf is within the allowable range (Allowable) in which the frequency difference estimating and compensating unit 243 can perform precise compensation.

Note that the initial setting value of the frequency shifting unit 241 is the frequency that can be appropriately expressed as a digital signal at a sub GHz or GHz order.

In Embodiment 1, the frequency setting signal of the frequency shift controlling unit 246 indicates allowable when the estimation value Δf is a frequency difference (-Δfallowable ≤ Δf ≤ +Δfallowable) within the allowable range, and indicates compensable when the estimation value Δf exceeds the frequency of the allowable range and is a frequency difference (-Δfcompensable < Δf ≤ +Δfcompensable) within a compensable range.

The estimation value Δf that is the frequency within the allowable range is a frequency difference for precise compensation that the frequency difference estimating and compensating unit 243 can adaptively and precisely estimate and compensate for.

The estimation value Δf that is the frequency difference within the compensable range is a frequency difference that is in a precisely compensable state in which adaptive and precise estimation and compensation can be performed, but is a frequency difference for which precise compensation cannot be performed when the estimation value Δf deviates from the precisely compensable state.

When the frequency setting signal of the frequency shift controlling unit 246 indicates allowable during the operation, the frequency shifting unit 241 does not update a shift amount setting value indicating a shift amount of frequency shift, and gives the sine wave of the frequency that is based on a current shift amount setting value to the digital signal obtained by the ADC unit 230.

When, for example, a center value of the digital signal obtained by the ADC unit 230 is the initial setting value, the digital signal obtained by the ADC unit 230 takes the initial setting value as the value of the center frequency.

Furthermore, when the center value of the digital signal obtained by the ADC unit 230 is a value changed from the initial setting value, the frequency shifting unit 241 gives the sine wave of the frequency that is based on the changed value to the digital signal obtained by the ADC unit 230.

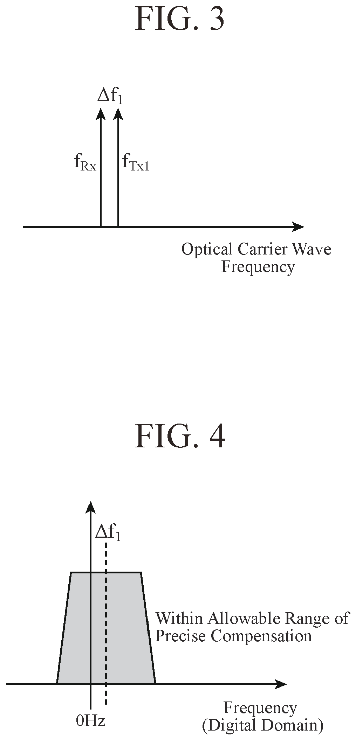

FIG. 3 illustrates the carrier wave frequency f_{Tx1} of the modulated light received by the optical coherent detecting unit 210 and the carrier wave frequency f_{Rx} of the interference light from the interference light generating unit 220 when the estimation value Δf is a frequency difference Δf₁ within the allowable range, and FIG. 4 illustrates a frequency (signal spectrum) of the digital signal that is to be input to the reception side DSP 240 and is obtained by the ADC unit 230 in a case where the carrier wave frequency f_{Tx1} and the carrier wave frequency f_{Rx} have the relationship in FIG. 3.

The frequency shifting unit 241 maintains the digital signal of the frequency illustrated in FIG. 4.

When the frequency setting signal of the frequency shift controlling unit 246 indicates that compensation is possible during the operation, the frequency shifting unit 241 gradually updates the shift amount setting value indicating the shift amount of frequency shift in a stepwise manner in such a way that the estimation value Δf of the frequency difference between transmission and reception is 0 Hz, and sets the center frequency of the digital signal obtained by the ADC unit 230 to be 0 Hz.

The center frequency of the digital signal obtained by the ADC unit 230 is updated by the frequency shifting unit 241 by moderately changing the center frequency in such a way that quality of the waveform of the demodulated signal obtained by the frequency difference estimating and compensating unit 243 does not change.

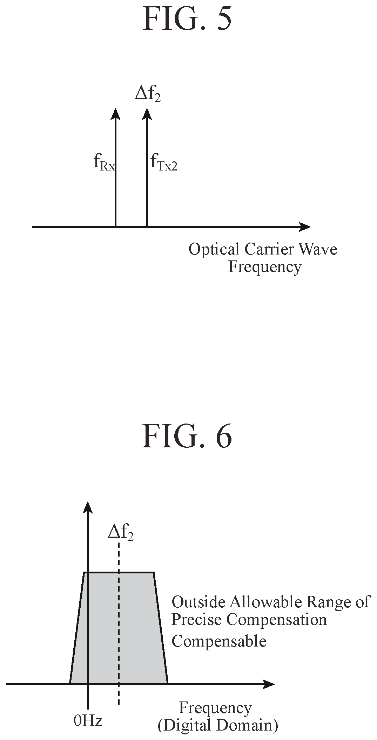

FIG. 5 illustrates a carrier wave frequency f_{Tx2} of modulated light received by the optical coherent detecting unit 210 and the carrier wave frequency f_{Rx} of the interference light from the interference light generating unit 220 when the estimation value Δf is a frequency difference Δf₂ outside the allowable range and within the compensable range, and FIG. 6 illustrates a frequency (signal spectrum) of a digital signal that is to be input to the reception side DSP 240 and is obtained by the ADC unit 230 in a case where the carrier wave frequency f_{Tx2} and the carrier wave frequency f_{Rx} have the relationship in FIG. 5.

Even when, for example, the carrier wave frequency f_{Rx} of the interference light from the interference light generating unit 220 and the carrier wave frequency f_{Tx0} of the CW light from the CW light generating unit 140 are the same, the frequency difference Δf₂ outside the allowable range and within the compensable range is produced when great Doppler shift occurs due to an orbit state between satellites.

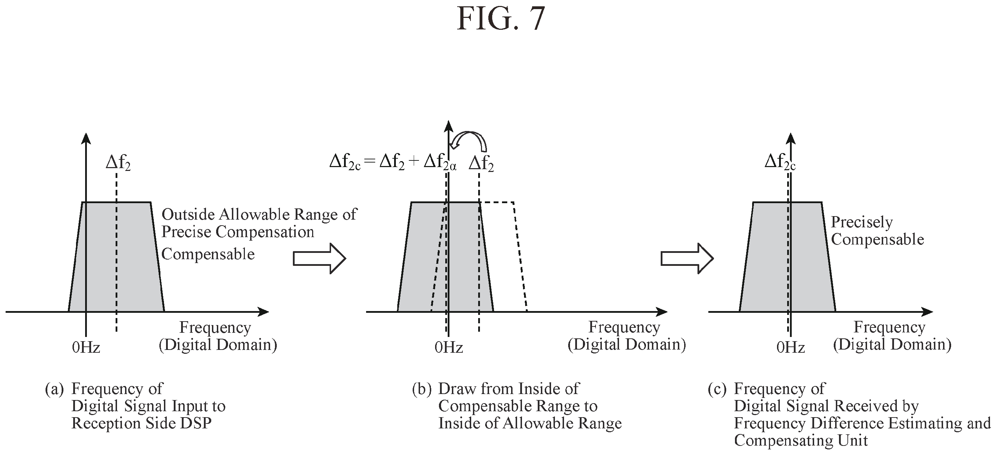

When the digital signal obtained by the ADC unit 230 illustrated in FIG. 6 (in FIG. 7A) is processed by the equalizing unit 242, and is received by the frequency difference estimating and compensating unit 243, the frequency shift controlling unit 246 determines that an estimation value Δf₂ of the frequency difference between transmission and reception deviates from the allowable range of precise compensation, and gives the frequency setting signal indicating compensable to the frequency shifting unit 241.

As illustrated in FIG. 7B, the frequency shifting unit 241 performs coarse compensation for pulling the estimation value Δf₂ from within the compensable range into the allowable range, that is, for updating settings of frequency shift in such a way that the estimation value Δf_{2C} of the frequency difference is 0 Hz (Δf_{2C}) on the basis of the frequency setting signal indicating that compensation is possible.

That is, the frequency shifting unit 241 shifts the center frequency of the digital signal in such a direction that the center frequency is 0 Hz with respect to the frequency axis by multiplying on the digital signal obtained by the ADC unit 230 in the time domain the sine wave for frequency shift of a shift amount Δf_{2α} obtained on the basis of the frequency setting signal indicating that compensation is possible (seemingly, Δf_{2c} = Δf₂+Δf_{2α}).

The center frequency of the digital signal is updated during this coarse compensation by moderately changing the center frequency of the digital signal obtained by the ADC unit 230 in a stepwise manner in such a way that the quality of the waveform of the demodulated signal obtained by the frequency difference estimating and compensating unit 243 does not change.

That is, the frequency shifting unit 241 moderately changes the frequency of the sine wave to be multiplied on the digital signal obtained by the ADC unit 230 in a stepwise manner.

When the estimation value Δf_{2c} of the frequency difference subjected to coarse compensation indicates 0 Hz as illustrated in FIG. 7C, in the frequency setting signal of the frequency shift controlling unit 246, the estimation value Δf₂ of the frequency difference indicates 0 Hz (Δf_{2C}), and the frequency shifting unit 241 stops setting frequency shift, that is, does not update the shift amount setting value indicating the shift amount Δf_{2α} of the shift amount.

Coarse compensation performed by the frequency shifting unit 241 can be performed in a wide frequency domain at a high sampling rate of the ADC unit 230, so that it is possible to accurately express the digital signal obtained by performing frequency shift on the digital signal obtained by the ADC unit 230.

As a result, by outputting a sine wave on the basis of the frequency setting signal of the frequency shift controlling unit 246, and multiplying the sine wave on the digital signal obtained by the ADC unit 230, the frequency shifting unit 241 brings a frequency component of the digital signal obtained by the ADC unit 230 close to 0 Hz.

Note that the frequency shift by the frequency shifting unit 241 may be performed by a digital signal processing arithmetic operation in the frequency domain, instead of performing multiplication in the time domain.

Signal processing performed by the equalizing unit 242 for demodulation in the reception side DSP 240 is a general method of digital signal processing used by a general digital coherent system, and will be briefly described.

In the following description, the digital signal subjected to coarse compensation by the frequency shifting unit 241 and obtained by the ADC unit 230 includes a digital signal whose frequency has been shifted on the basis of the shift amount setting value, and a digital signal for which setting of frequency shift has been stopped.

In a case where the equalizing unit 242 has a clock synchronization function, the equalizing unit 242 compensates for a clock difference between optical transmission and optical reception for the digital signal subjected to coarse compensation by the frequency shifting unit 241 and obtained by the ADC unit 230, and, in a case where the equalizing unit 242 has an adaptive equalization function, the equalizing unit 242 adaptively compensates for polarization demultiplexing of an X polarization signal (the XI signal and the XQ signal) and the Y polarization signal (the YI signal and the YQ signal) and deterioration of frequency characteristics.

In short, the equalizing unit 242 performs waveform distortion compensation on the digital signal subjected to coarse compensation and obtained by the ADC unit 230.

The frequency difference estimating and compensating unit 243 compensates for the frequency difference between the carrier wave frequency f_{Tx} of the modulated light received by the optical coherent detecting unit 210 and the carrier wave frequency f_{Rx} of the interference light from the interference light generating unit 220 (the frequency difference between transmission and reception).

The frequency difference estimating and compensating unit 243 performs precise compensation on the center frequency of the digital signal subjected to the coarse compensation of the estimation value Δf of the frequency difference by the frequency shifting unit 241.

When the frequency difference Δf between transmission and reception is within the allowable range, the frequency difference estimating and compensating unit 243 can perform precise compensation that can adaptively and precisely estimate and compensate for the digital signal subjected to coarse compensation.

The frequency difference estimating and compensating unit 243 estimates a frequency that is based on phase rotation of a signal plane space point expressed on the IQ signal plane space of a pilot symbol signal cyclically inserted in the modulated light received by the optical coherent detecting unit 210, and performs precise compensation on the frequency of the digital signal subjected to coarse compensation by the frequency shifting unit 241 and obtained by the ADC unit 230.

Note that precise compensation of the frequency of the digital signal is not limited to compensation performed using a pilot insertion method that uses a pilot symbol signal, and compensation may be performed using a generally known frequency estimation method such as a method that uses Fourier transform analysis or exponentiation.

Compensation for rotation of a signal plane space point, that is compensation for a frequency difference is performed by the frequency difference estimating and compensating unit 243 by performing multiplication on the digital signal in the time domain.

In this regard, because the frequency difference fluctuates as time passes in the frequency difference estimating and compensating unit 243, not only the estimation value of the frequency difference but also the frequency of the sine wave for compensation are adaptively updated.

The frequency difference compensated by the frequency difference estimating and compensating unit 243 is performed by using a general method of digital signal processing used by the general digital coherent system.

It is assumed that the frequency difference estimating and compensating unit 243 receives an input of a signal of a sampling rate lower than that in the frequency shifting unit 241 such as a time-series signal that is expressed by one sample per symbol or a time-series signal that is expressed as two samples per symbol.

Even when the sampling rate is low as described above, the estimation value Δf of the frequency difference between transmission and reception is subjected to coarse compensation by the frequency shifting unit 241 and is within the allowable range, and the frequency of the digital signal obtained by the ADC unit 230 is close to 0 Hz due to coarse compensation, so that the frequency difference estimating and compensating unit 243 can normally, adaptively, and precisely perform estimation and compensation even in narrow frequency space.

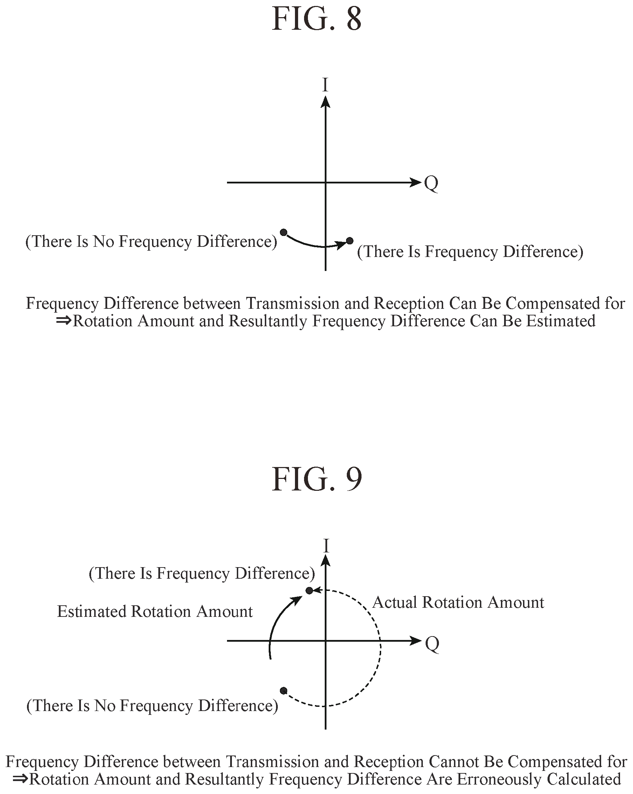

When, for example, phase rotation is within 180° in a case where there is the frequency difference compared to a case where there is no frequency difference as illustrated in FIG. 8, that is, the estimation value Δf of the frequency difference between transmission and reception can be compensated for, it is possible to normally perform estimation and compensation.

Note that, when the frequency shifting unit 241 does not perform coarse compensation, that is, when, for example, the center frequency of the digital signal obtained by the ADC unit 230 is greatly apart from 0 Hz, and the estimation value Δf of the frequency difference between transmission and reception deviates from the compensable range (not compensable), the frequency difference estimating and compensating unit 243 cannot correctly express the waveform as a signal outside a band, and phase rotation exceeds 180° in the case where there is the frequency difference compared to the case where there is no frequency difference as illustrated in FIG. 9, that is, the frequency difference estimating and compensating unit 24 s d 3 causes an estimation error as a result.

The frequency shift controlling unit 246 obtains the estimation value Δf of the frequency difference between transmission and reception of the frequency difference estimating and compensating unit 243, obtains the frequency setting signal that is associated with the estimation value Δf, the frequency setting signal indicating allowable when the estimation value Δf is within the allowable range, and indicating compensable when the estimation value Δf deviates from the allowable range, that is, the estimation value Δf exceeds the allowable range and falls within the compensable range, and gives the obtained frequency setting signal to the frequency shifting unit 241.

Signal processing performed by the phase estimating unit 244 and the symbol determining unit 245 for demodulation in the reception side DSP 240 is a general method of digital signal processing used by the general digital coherent system, and will be briefly described.

The phase estimating unit 244 compensates for phase fluctuations of the light source constituting a CW light generating unit in the optical transmitter, and the light source constituting the interference light generating unit 220.

The symbol determining unit 245 determines a transmission symbol in a demodulated signal subjected to waveform distortion compensation.

Note that error correction of the demodulated signal may be performed at a stage subsequent to the symbol determining unit 245.

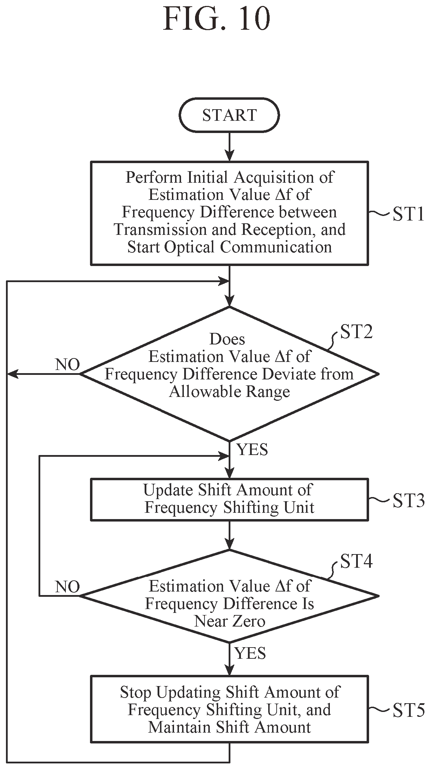

Next, operations of the frequency shifting unit 241 and the frequency shift controlling unit 246 in the optical receiver according to Embodiment 1, particularly, the reception side DSP 240 will be mainly described with reference to FIG. 10.

When communication with the optical transmitter of another optical transmitting and receiving device is started, an initial acquisition regarding the estimation value Δf of the frequency difference between transmission and reception is performed in step ST1.

The frequency shifting unit 241 that has received the frequency setting signal of the frequency shift controlling unit 246 that is based on the estimation value Δf initially acquired by the frequency difference estimating and compensating unit 243 makes initial settings of a shift amount setting value indicating a shift amount of frequency shift.

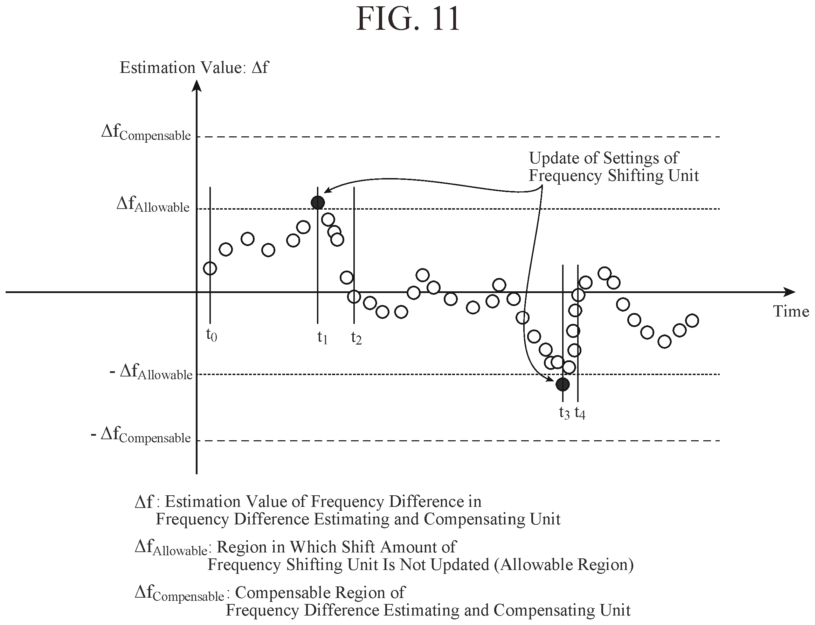

The estimation value Δf after being initially set is indicated at a time t₀ in FIG. 11.

In FIG. 11, the horizontal axis indicates a time, the vertical axis indicates an estimation value, and black circles indicate the estimation value Δf obtained by the frequency difference estimating and compensating unit 243.

The estimation value Δf is obtained at a symbol cycle order. Furthermore, the estimation value Δf may be obtained by a moving average from a plurality of symbols.

To simplify the description, the estimation values Δf indicated by the black circles in FIG. 11 do not represent all the estimation values Δf obtained by the frequency difference estimating and compensating unit 243.

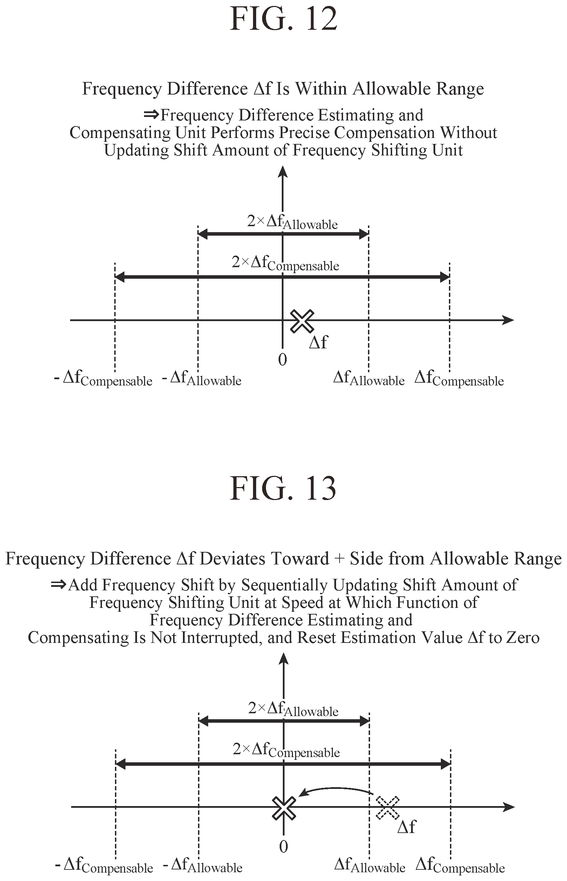

When communication with the optical transmitter of the other optical transmitting and receiving device is started, and the estimation value Δf obtained by the frequency difference estimating and compensating unit 243 is within the allowable range (-Δf allowable ≤ Δf ≤ +Δf allowable: 2 × Δf allowable) as illustrated in FIG. 12, the frequency setting signal of the frequency shift controlling unit 246 indicates allowable, and the frequency shifting unit 241 gives the sine wave of the frequency that is based on a current shift amount setting value to the digital signal obtained by the ADC unit 230 without updating the shift amount.

Accordingly, the digital signal obtained by the ADC unit 230 is subjected to precise compensation by the frequency difference estimating and compensating unit 243.

In step ST2, the frequency shift controlling unit 246 determines whether or not the estimation value Δf of the frequency difference obtained by the frequency difference estimating and compensating unit 243 is within the allowable range, obtains the frequency setting signal indicating allowable assuming that the estimation value Δf of the frequency difference is within the allowable range by a time immediately before a time t₁ illustrated in FIG. 11, and the frequency difference estimating and compensating unit 243 performs precise compensation on the digital signal to which the sine wave of the frequency based on a current shift amount setting value has been given and that has been obtained by the ADC unit 230 without updating the shift amount.

Step ST2 is a step of maintaining the shift amount of the center frequency of the digital signal obtained by the ADC unit 230 at a time when the estimation value Δf of the frequency difference is within the allowable range.

When the estimation value Δf of the frequency difference obtained by the frequency difference estimating and compensating unit 243 exceeds (deviates from) +Δf allowable at the time t₁ illustrated in FIG. 11 as illustrated in FIG. 13, and the center frequency of the digital signal obtained by the ADC unit 230 is greatly apart from 0 Hz, the processing proceeds from step ST2 to step ST3.

In step ST3, the frequency setting signal of the frequency shift controlling unit 246 indicates compensable, the frequency shifting unit 241 updates the shift amount at a speed at which a compensating function of the frequency difference estimating and compensating unit 243 is not interrupted in such a direction that the estimation value Δf of the frequency difference is 0, and the processing proceeds to step ST4.

The frequency difference estimating and compensating unit 243 performs precise compensation on the digital signal to which the sine wave of the frequency based on the updated shift amount has been given and that has been obtained by the ADC unit 230.

In step ST4, the frequency shift controlling unit 246 determines whether or not the estimation value Δf of the frequency difference obtained by the frequency difference estimating and compensating unit 243 is 0 or is within a range of 0±β, the processing returns to step ST3 when the estimation value Δf is outside the range of 0±β, the frequency shifting unit 241 updates the shift amount, and the processing proceeds to step ST4.

Until the estimation value Δf of the frequency difference falls within the range of 0±β, step ST3 and step ST4 are repeated by a time t₂ illustrated in FIG. 11.

β represents a value that is larger than a changeable frequency difference obtained by one update of the shift amount.

Step ST3 and step ST4 are updating steps where, when the estimation value Δf of the frequency difference deviates from the allowable range, the frequency shifting unit 241 updates the shift amount of the center frequency of the digital signal obtained by the ADC unit 230.

The maintaining step in step ST2 and the updating steps in step ST3 and step ST4 make up a step where the frequency shifting unit 241 performs coarse compensation of a frequency difference between transmission and reception on the center frequency of the digital signal obtained by the ADC unit 230.

Furthermore, although not clearly illustrated in FIG. 10, there is a step where the frequency difference estimating and compensating unit 243 performs precise compensation on the digital signal subjected to coarse compensation of the frequency difference between transmission and reception in step ST2, step ST3, and step ST4.

When the estimation value Δf of the frequency difference falls within the range of 0±β at the time t₂ illustrated in FIG. 11, the processing proceeds to step ST5, the frequency shifting unit 241 stops updating the shift amount and maintains the shift amount, and the processing returns to step ST2.

In FIG. 11, Because the estimation value Δf of the frequency difference is within the allowable range by a time immediately after the time t₂ and immediately before a time t₃, in step ST2, the frequency shifting unit 241 does not update the shift amount, and the frequency difference estimating and compensating unit 243 performs precise compensation on the digital signal to which the sine wave of the frequency based on a current shift amount maintained after the update has been given and that has been obtained by the ADC unit 230.

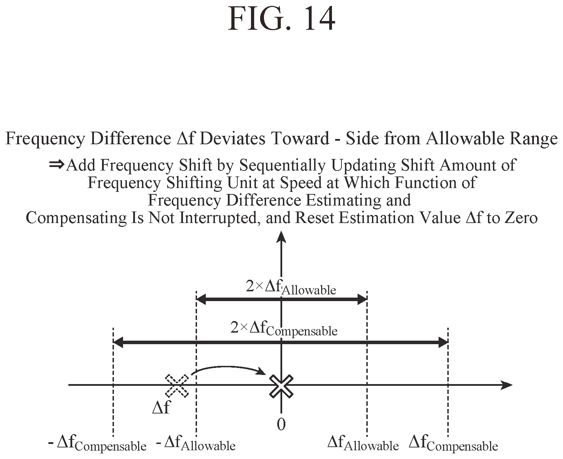

When the estimation value Δf of the frequency difference obtained by the frequency difference estimating and compensating unit 243 exceeds (deviates from) -Δf allowable at the time t₃ illustrated in FIG. 11 as illustrated in FIG. 14, the processing proceeds from step ST2 to step ST3.

In step ST3 and step ST4, as described above, the frequency shifting unit 241 sequentially updates the shift amount at a speed at which the compensating function of the frequency difference estimating and compensating unit 243 is not interrupted in such a direction that the estimation value Δf of the frequency difference is 0 until the estimation value Δf of the frequency difference falls within the range of 0±β.

The frequency difference estimating and compensating unit 243 performs precise compensation on the digital signal to which the sine wave of the frequency based on the updated shift amount has been given and that has been obtained by the ADC unit 230.

When the estimation value Δf of the frequency difference falls within the range of 0±β at a time t₄ illustrated in FIG. 11, the processing proceeds to step ST5, the frequency shifting unit 241 stops updating the shift amount and maintains the shift amount, and the processing returns to step ST2.

Thus, the frequency shifting unit 241 performs coarse compensation, the frequency difference estimating and compensating unit 243 performs precise compensation on the digital signal on which the frequency shifting unit 241 has performed coarse compensation and which has been obtained by the ADC unit 230, so that it is possible to perform waveform distortion compensation even when a frequency difference is generated between optical carrier waves of transmission and reception.

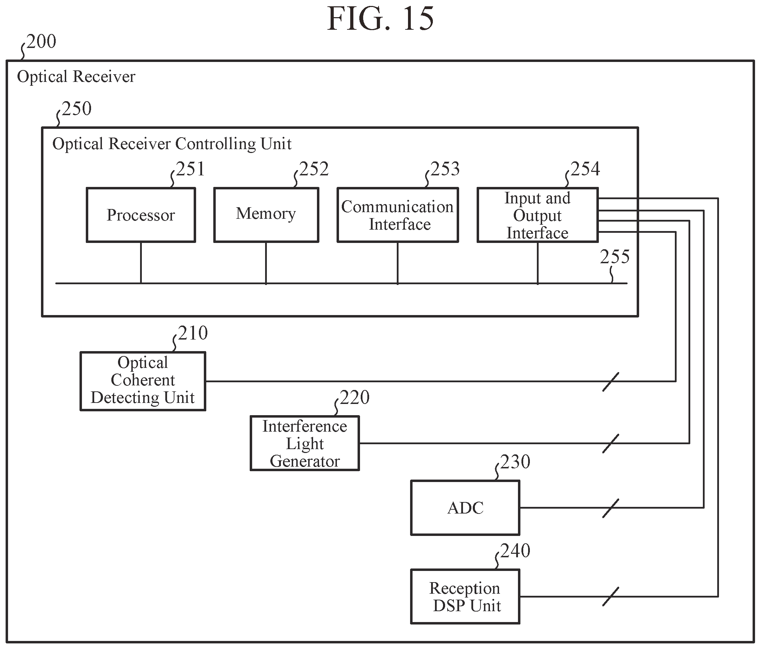

Next, a hardware configuration of the optical receiver 200 according to Embodiment 1 will be described with reference to FIG. 15.

In FIG. 15, the same reference numerals as reference numerals assigned in FIGS. 1 and 2 indicate identical or corresponding parts.

An optical receiver controlling unit 250 includes a processor 251 such as a Central Processing Unit (CPU) or a System Large Scale Integration (LSI), a memory 252 configured with a Random Access Memory (RAM) and a Read Only Memory (ROM), a communication interface 253, and an input and output interface 254.

The processor 251, the memory 252, the communication interface 253, and the input and output interface 254 are connected to a bus 255, data, control signals, and the like are mutually exchanged via the bus 255.

The processor 251 reads a program recorded in the ROM in the memory 252 once to the RAM in the memory 252, and executes processing in accordance with the read program.

In the ROM in the memory 252, various data, a program for executing processing in the optical receiver 200, a processing program necessary to activate the optical receiver 200, and the like are stored.

The communication interface 253 is used to transmit and receive data and control signals to and from each component in the optical receiver 200 and each component of another optical transmitting and receiving device.

The input and output interface 254 transmits and receives a control signal and a modulated signal to and from each component in the optical receiver 200 via an electrical wiring.

The input and output interface 254 is, for example, an interface for supplying to the interference light generating unit 220 an injection current to the light source constituting the interference light generating unit 220 for causing the interference light generating unit 220 to generate light.

Furthermore, the input and output interface 254 is, for example, an interface for outputting various control signals to the reception side DSP unit.

Although FIG. 15 illustrates the optical receiver controlling unit 250 as a different component from the reception side DSP 240 for ease of description, the optical receiver controlling unit 250 may have a functional portion that can be configured with software in the reception side DSP 240.

For example, the functions of the frequency shifting unit 241, the equalizing unit 242, the frequency difference estimating and compensating unit 243, the phase estimating unit 244, the symbol determining unit 245, and the frequency shift controlling unit 246 constituting the reception side DSP 240 may be implemented by the processor 251 and the memory 252.

In a case where the functions of the frequency shifting unit 241 and the frequency shift controlling unit 246 are implemented by the processor 251 and the memory 252, an optical reception program that is recorded in the ROM in the memory 252 and is executed by the processor 251 includes a procedure that performs coarse compensation of a frequency difference between transmission and reception, the procedure including a procedure of maintaining a shift amount of a center frequency of a digital signal obtained by causing modulated light optically modulated at a carrier wave frequency to interfere with interference light, and performing analog-to-digital conversion on an analog electrical signal subjected to coherent detection when the frequency difference between the transmission and the reception falls within the allowable range, and a procedure of, when the frequency difference between the transmission and the reception deviates from the allowable range, updating the shift amount of the center frequency of the digital signal obtained. The optical reception program further includes a procedure of performing precise compensation on the center frequency of the digital signal subjected to the coarse compensation of the frequency difference between the transmission and the reception.

Because the optical receiver according to Embodiment 1 includes the optical coherent detecting unit 210 that receives modulated light optically modulated at a carrier wave frequency, causes the received modulated light to interfere with interference light to perform coherent detection, and outputs an analog electrical signal, the ADC unit 230 that performs analog-to-digital conversion on the analog electrical signal from the optical coherent detecting unit 210, and obtains a digital signal; and the reception side DSP 240 that includes the frequency shifting unit 241 that performs coarse compensation of shifting a center frequency of the digital signal obtained by the ADC unit 230 to a frequency that reduces the frequency difference Δf between transmission and reception, and the frequency difference estimating and compensating unit 243 that performs precise compensation on the center frequency of the digital signal subjected to the coarse compensation of the frequency difference by the frequency shifting unit 241, the digital signal that is in a state where the center frequency of the digital signal obtained by the ADC unit 230 has been brought close to 0 Hz, that is, the digital signal whose phase rotation speed has been reduced is received by the frequency difference estimating and compensating unit 243, so that it is possible to accurately read the phase rotation amount of the digital signal in the frequency difference estimating and compensating unit 243, and the frequency difference estimating and compensating unit 243 can adaptively and precisely estimate and compensate for the optical frequency difference.

As a result, it is possible to improve signal quality of a demodulated signal from the reception side DSP 240 and eventually expand a compensation range of the optical frequency difference in the optical receiver.

### Embodiment 2.

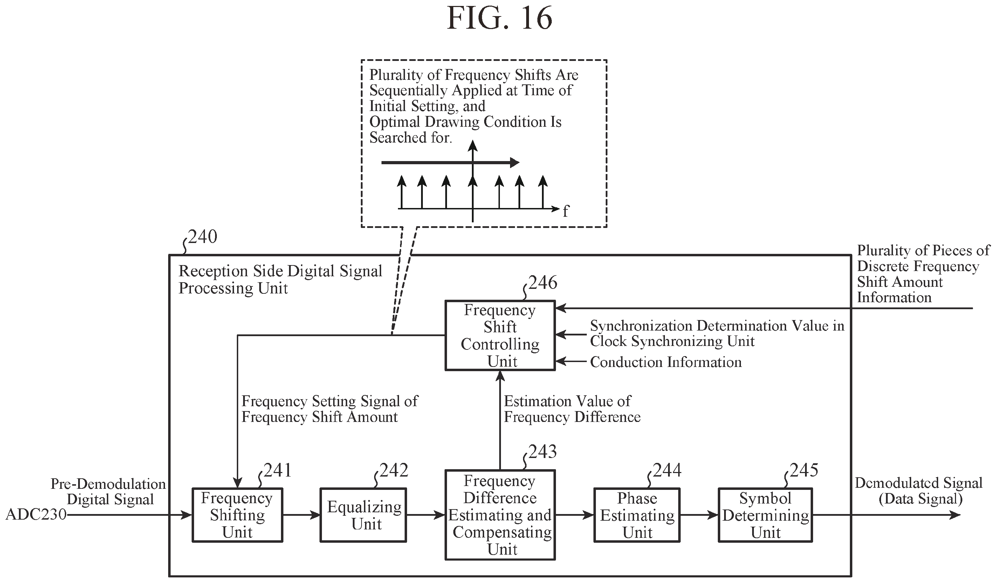

An optical receiver according to Embodiment 2 will be described with reference to FIG. 16.

The optical receiver according to Embodiment 2 differs from the optical receiver according to Embodiment 1 in the function of a reception side DSP 240, and other points are the same.

In FIG. 16, the same reference numerals as reference numerals assigned in FIGS. 1 and 2 indicate identical or corresponding parts.

The equalizing unit 242, the frequency difference estimating and compensating unit 243, the phase estimating unit 244, and the symbol determining unit 245 constituting the reception side DSP 240 are the same as the equalizing unit 242, the frequency difference estimating and compensating unit 243, the phase estimating unit 244, and the symbol determining unit 245 constituting the reception side DSP 240 in the optical receiver according to Embodiment 1.

A frequency shifting unit 241 and a frequency shift controlling unit 246 differ from the frequency shifting unit 241 and the frequency shift controlling unit 246 of the optical receiver according to Embodiment 1 in a method of setting an initial setting value at a time of start of communication, and what is the same is that, during an operation, the frequency shifting unit 241 and the frequency shift controlling unit 246 perform coarse compensation of shifting the center frequency of the digital signal obtained by the ADC unit 230 to a frequency that reduces the estimation value Δf of the frequency difference between transmission and reception.

Accordingly, setting of the initial setting value at the time of start of communication will be described.

The frequency shift controlling unit 246 obtains shift amount setting information indicating a shift amount of a frequency and obtained from the outside of the reception side DSP 240, and gives the shift amount setting information to the frequency shifting unit 241.

At the same time, the frequency shift controlling unit 246 gives a synchronization determination value of a clock synchronization function of the equalizing unit 242 or conduction information to the frequency shifting unit 241.

The shift amount setting information from the outside is information indicating a plurality of discrete shift amounts as illustrated in FIG. 16, and the frequency shift controlling unit 246 sequentially receives information indicating a plurality of discrete frequency shift amounts.

The frequency shifting unit 241 sequentially performs frequency shift of a shift amount on the center frequency of the digital signal obtained by the ADC unit 230 on the basis of information indicating the plurality of discrete shift amounts.

The frequency shifting unit 241 sets a frequency difference that is within the compensable range in the frequency difference estimating and compensating unit 243, more preferably, a shift amount indicating an optimal frequency difference as an initial setting value among the estimation values Δf of the frequency differences between transmission and reception obtained by sequentially performed frequency shift on the basis of the synchronization determination value of the clock synchronization function of the equalizing unit 242 or the conduction information.

The optical receiver according to Embodiment 2 has the same effect as that of the optical receiver according to Embodiment 1 and, in addition, determines the initial setting value of the shift amount by the frequency shifting unit 241 on the basis of the shift amount setting information indicating the plurality of discrete shift amounts, so that, even when the frequency difference between transmission and reception at the time of start of communication is a frequency difference that is outside the compensable range of the frequency difference estimating and compensating unit 243, it is possible to pull the center frequency of the digital signal obtained by the ADC unit 230 to the frequency difference that is within the compensable range of the frequency difference estimating and compensating unit 243 at the time of initial setting, and precisely perform coarse compensation and precise compensation during the operation.

### Embodiment 3.

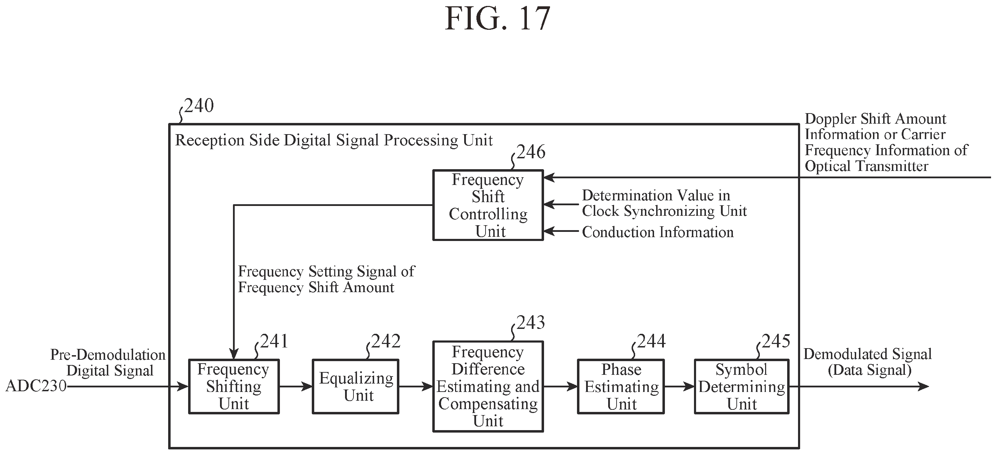

An optical receiver according to Embodiment 3 will be described with reference to FIG. 17.

The optical receiver according to Embodiment 3 differs from the optical receiver according to Embodiment 1 in the function of a reception side DSP 240, and other points are the same.

In FIG. 17, the same reference numerals as reference numerals assigned in FIGS. 1 and 2 indicate identical or corresponding parts.

The equalizing unit 242, the frequency difference estimating and compensating unit 243, the phase estimating unit 244, and the symbol determining unit 245 constituting the reception side DSP 240 are the same as the equalizing unit 242, the frequency difference estimating and compensating unit 243, the phase estimating unit 244, and the symbol determining unit 245 constituting the reception side DSP 240 in the optical receiver according to Embodiment 1.

The frequency shift controlling unit 246 regularly or cyclically obtains shift amount setting information indicating a shift amount of a frequency and obtained from the outside of the reception side DSP 240, and gives a frequency setting signal of the shift amount setting information to the frequency shifting unit 241.

At the same time, the frequency shift controlling unit 246 gives a synchronization determination value of the clock synchronization function of the equalizing unit 242 or the conduction information to the frequency shifting unit 241.

The shift amount setting information from the outside is information indicating either a Doppler shift amount estimated on the basis of satellite orbit information or a carrier frequency of another optical transmitter.

The frequency shifting unit 241 regularly or cyclically performs frequency shift of the shift amount indicated by the frequency setting signal of the frequency shift controlling unit 246 on the center frequency of the digital signal obtained by the ADC unit 230 for the center frequency of the digital signal obtained by the ADC unit 230 at the time of initial setting and during an operation.

The optical receiver according to Embodiment 3 determines a setting value of the shift amount of the frequency shifting unit 241 on the basis of the shift amount setting information indicating either the Doppler shift amount estimated on the basis of satellite orbit information or the carrier frequency of the other optical transmitter, so that it is possible to accurately perform coarse compensation and precise compensation.

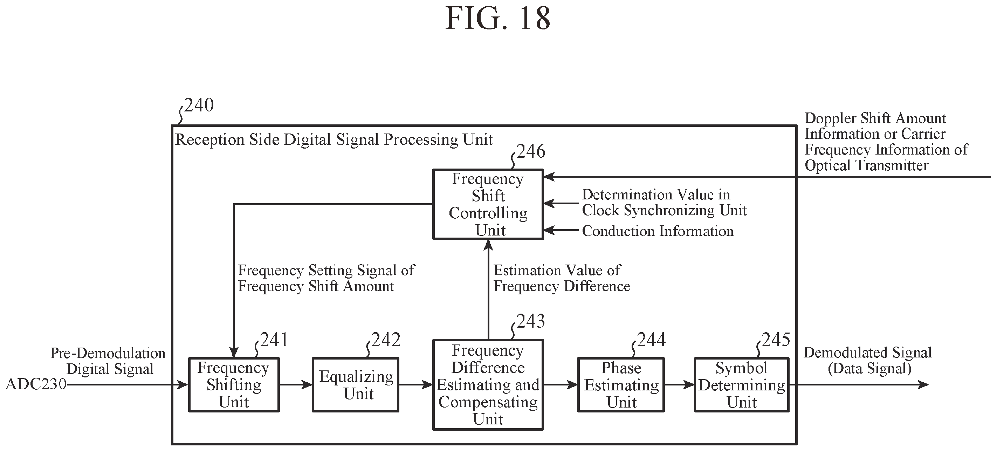

Note that, although the optical receiver according to Embodiment 3 determines the setting value of the shift amount of the frequency shifting unit 241 on the basis of either the shift amount setting information indicating the Doppler shift amount estimated on the basis of satellite orbit information or the carrier frequency of the other optical transmitter, similarly to the optical receiver according to Embodiment 1, as illustrated in FIG. 18, the frequency shift controlling unit 246 may also have a function of, by the frequency difference estimating and compensating unit 243, obtaining the estimation value Δf of the frequency difference between transmission and reception, obtaining the frequency setting signal that is associated with the estimation value Δf, the frequency setting signal indicating allowable when the estimation value Δf is within the allowable range, and indicating compensable when the estimation value Δf deviates from the allowable range, that is, the estimation value Δf exceeds the allowable range and falls within the compensable range. The optical receiver may further have a function of giving the obtained frequency setting signal to the frequency shifting unit 241.

That is, the shift amount setting information is used to set an initial setting value at the time of start of communication, and, during the operation, settings of the shift amount made by the frequency shifting unit 241 based on the shift amount setting information, and settings of the shift amount made by the frequency shifting unit 241 based on the estimation value Δf of the frequency difference between transmission and reception of the frequency difference estimating and compensating unit 243 are used in combination.

During the operation, combination of the settings of the shift amount made by the frequency shifting unit 241 based on the estimation value Δf of the frequency difference between transmission and reception of the frequency difference estimating and compensating unit 243 and the settings of the shift amount made by the frequency shifting unit 241 based on the shift amount setting information are performed as follows.

Similarly to Embodiment 1, at a time of a normal operation during the operation, the frequency shifting unit 241 sets the shift amount for the center frequency of the digital signal obtained by the ADC unit 230 on the basis of the frequency setting signal of the frequency shift controlling unit 246 that has received the estimation value Δf of the frequency difference obtained by the frequency difference estimating and compensating unit 243.

When receiving the shift amount setting information from the outside, the frequency shifting unit 241 adds the shift amount that is based on the shift amount setting information from the outside, to the shift amount that is based on the frequency setting signal of the frequency shift controlling unit 246, and sets the added shift amount as the shift amount for the center frequency of the digital signal obtained by the ADC unit 230.

Update is performed by gradually changing the center frequency in such a way that the quality of the waveform of a demodulated signal obtained by the frequency difference estimating and compensating unit 243 is maintained.

In this regard, when the frequency shifting unit 241 sets the shift amount by adding the shift amount indicated by the shift amount setting information, and therefore the estimation value Δf of the frequency difference between transmission and reception deviates from the allowable range during the operation, the frequency shifting unit 241 stops setting the shift amount performed by adding the shift amount indicated by the shift amount setting information, and mainly sets the shift amount of the frequency shifting unit 241 on the basis of the estimation value Δf of the frequency difference between transmission and reception of the frequency difference estimating and compensating unit 243.

### Embodiment 4.

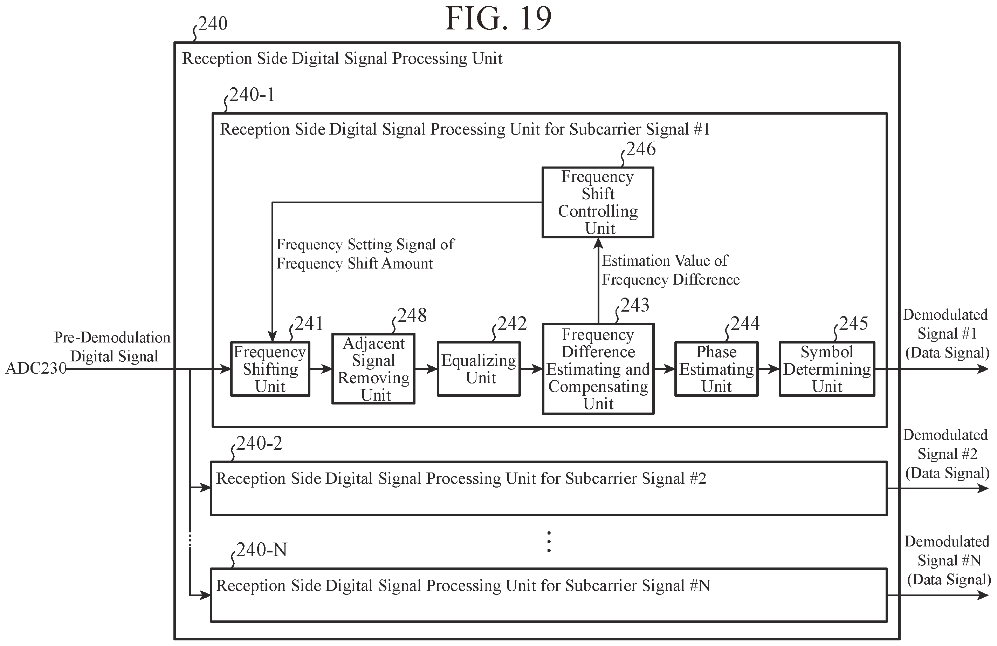

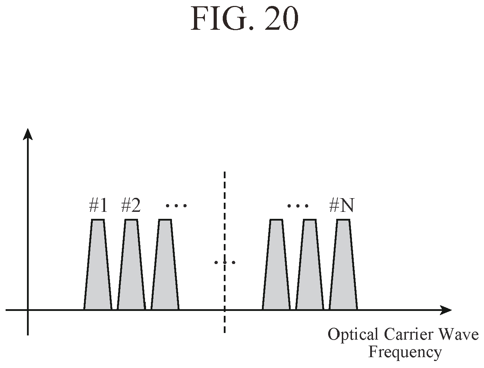

An optical receiver according to Embodiment 4 will be described with reference to FIGS. 19 and 20.

While the optical receiver according to Embodiment 1 receives modulated light obtained by modulating data information with a single carrier signal (single carrier wave frequency) of the general digital coherent system, the optical receiver according to Embodiment 4 receives modulated light obtained by modulating data information with a plurality of different subcarrier signals (a plurality of different carrier wave frequencies) of the subcarrier multiplexing system.

In the following description, a subcarrier signal on which data information has been superimposed will be referred to simply as a subcarrier signal to prevent complication of description.

In FIG. 19, the same reference numerals as reference numerals assigned in FIGS. 1 and 2 indicate identical or corresponding parts.

The optical receiver according to Embodiment 4 collectively receives subcarrier signals in a band in which the signals can be detected, and demultiplex and demodulate the subcarriers by reception side digital signal processing.

Note that, in Embodiment 4, a plurality of different subcarrier signals of modulated light to be received by the optical receiver may be each individually generated for a data signal of independent modulated light. Hence, it is assumed that the optical receiver collectively receives beams of modulated light that are sent from different spots and are not correlated.

The optical receiver according to Embodiment 4 is an optical receiver that targets at optical signals (the XI signal, the XQ signal, the YI signal, and the YQ signal) obtained by modulating the X polarized wave and the Y polarized wave into the I signal and the Q signal of quadrature phases, respectively, similarly to the optical receiver according to Embodiment 1, and further receives optical signals on which N channels of N subcarriers of different frequencies of each of the X polarized wave and the Y polarized wave have been multiplexed.

Note that the following description will be given on the assumption that, in the optical transmitter of another optical transmitting and receiving device, subcarrier signals are subjected to signal multiplexing at the frequency by a subcarrier multiplexing unit, and are output as modulated light.

Because the optical coherent detecting unit 210, the interference light generating unit 220, and the ADC unit 230 of the optical receiver according to Embodiment 4 employ basically the same configurations as those of the optical coherent detecting unit 210, the interference light generating unit 220, and the ADC unit 230 of the optical receiver according to Embodiment 1, and are used for a generally known subcarrier multiplexing system, description thereof will be omitted.

Although the reception side DSPs 240 are provided so as to correspond to four pre-modulation signals of the XI signal, the XQ signal, the YI signal, and the YQ signal that are analog voltage signals obtained by the optical coherent detecting unit 210 by causing optical interference, only one pre-modulation signal will be described below without distinguishing between pre-modulation signals, as in Embodiment 1.

The reception side DSP 240 includes N reception side DSPs 240-1 to 240-N so as to correspond to N subcarrier signals of received modulated light.

The N subcarrier signals of the modulated light are centrosymmetrical about the center frequency for the N subcarrier signals in a case where N represents an even number on the frequency axis as illustrated in FIG. 20.

Furthermore, the carrier wave frequency of interference light from the interference light generating unit 220 is set to the center frequency for the N subcarrier signals.

The N reception side DSPs 240-1 to 240-N each individually process the corresponding N subcarriers, and each include the frequency shifting unit 241, the equalizing unit 242, the frequency difference estimating and compensating unit 243, the phase estimating unit 244, the symbol determining unit 245, the frequency shift controlling unit 246, and an adjacent signal removing unit 248.

Each of the N reception side DSPs 240-1 to 240-N performs signal processing performed by the equalizing unit 242, the phase estimating unit 244, and the symbol determining unit 245 for demodulation in the reception side DSP 240 similarly to signal processing performed by the equalizing unit 242, the phase estimating unit 244, and the symbol determining unit 245 according to Embodiment 1 for demodulation in the reception side DSP 240 so as to correspond to each of to the N subcarrier signals.

Furthermore, the adjacent signal removing unit 248 functions as a low-pass filter or a band pass filter that removes an adjacent signal that is outside a bandwidth of each subcarrier signal, from the N subcarrier signals to which the shift amount has been given by the frequency shifting unit 241, and performs signal demultiplexing on the subcarrier signals.

The frequency shifting unit 241 of each of the N reception side DSPs 240-1 to 240-N sets as an initial setting value a shift amount that is based on a frequency difference between frequencies of the subcarrier signals for the center frequency for the N subcarrier signals at the time of start of communication.

As a result, in each of the N reception side DSPs 240-1 to 240-N, the initially set frequency shifting unit 241 shifts the frequency in such a way that the frequency falls within the precisely compensable range for the subcarrier signals of the digital signal obtained by the ADC unit 230.

The initial value of the shift amount is set by the frequency shifting unit 241 by giving to the frequency shift controlling unit 246 the frequency difference between frequencies of the subcarrier signals for the center frequency for the N subcarrier signals instead of the Doppler shift amount or the carrier frequency of the optical transmitter.

The adjacent signal removing unit 248 of each of the N reception side DSPs 240-1 to 240-N performs signal demultiplexing on the digital signal obtained by the ADC unit 230 into subcarrier signals, so that the frequency difference estimating and compensating unit 243 of each of the N reception side DSPs 240-1 to 240-N can perform precise compensation on the corresponding subcarrier signal because the frequency difference is within the allowable range.

When the frequency shifting unit 241 of each of the N reception side DSPs 240-1 to 240-N starts communication with the optical transmitter of the other optical transmitting and receiving device after initial setting, if the estimation value Δf obtained by the corresponding frequency difference estimating and compensating unit 243 is within the allowable range, the frequency shifting unit 241 gives the sine wave of the frequency at the time of the initial setting to the digital signal obtained by the ADC unit 230 without updating the initially set shift amount.

Accordingly, the digital signal of the subcarrier signals obtained by the ADC unit 230 is subjected to precise compensation by the frequency difference estimating and compensating unit 243.

When the estimation value Δf obtained by the corresponding frequency difference estimating and compensating unit 243 deviates from the allowable range, the frequency shifting unit 241 of each of the N reception side DSPs 240-1 to 240-N updates the shift amount in such a direction that the estimation value Δf of the frequency difference is 0.

That is, as similarly described in Embodiment 1, in each of the N reception side DSPs 240-1 to 240-N, the frequency shifting unit 241 performs coarse compensation, and the frequency difference estimating and compensating unit 243 performs precise compensation.

The optical receiver according to Embodiment 4 is an optical receiver that receives modulated light obtained by modulating data information with a plurality of different subcarrier signals of the subcarrier multiplexing system, and updates a shift amount in such a way that the frequency shifting units 241 of the plurality of reception side DSPs 240-1 to 240-N corresponding to the plurality of subcarrier signals pull the corresponding subcarrier signals in the allowable range, so that each of the reception side DSPs 240-1 to 240-N can accurately read a phase rotation amount of the corresponding subcarrier signal, and the frequency difference estimating and compensating unit 243 can adaptively and precisely estimate and compensate for the optical frequency difference.

Note that the embodiments can be freely combined, any components in the embodiments can be modified, or any components in the embodiments can be omitted.

### INDUSTRIAL APPLICABILITY

The optical receiver according to the present disclosure can be applied to an optical receiver that is used in the digital coherent technical field widely applied to metro core networks and optical submarine cable systems of optical fiber communication, an optical receiver that is used for a wireless access network in the wireless communication field, an optical receiver that is used for an optical network including core metro used for encrypted signal, a video system, existing Internet protocols, and an optical receiver of a satellite-mounted optical communication terminal in an optical communication system such as space or space optical communication that does not use optical fibers.

The optical receiver according to the present disclosure is suitable for an optical receiver in an optical communication system that uses low and middle-speed digital coherent signals of less than 100 Gbps in particular.

### REFERENCE SIGNS LIST

100: optical transmitter, 110: modulated signal generating unit, 120: DAC unit, 130: optical modulating unit, 140: CW light generating unit, 200: optical receiver, 210: optical coherent detecting unit, 220: interference light generating unit, 230: ADC unit, 240, 240-1 to 240-N: reception side digital signal processing unit, 241: frequency shifting unit, 242: equalizing unit, 243: frequency difference estimating and compensating unit, 244: phase estimating unit, 245: symbol determining unit, 246: frequency shift controlling unit, 247: adjacent signal removing unit

## Claims

1. An optical receiver comprising:
an optical coherent detecting unit to receive modulated light optically modulated at a carrier wave frequency, cause the received modulated light to interfere with interference light to perform coherent detection, and output an analog electrical signal;
an analog-to-digital converting unit to obtain a digital signal by performing analog-to-digital conversion on the analog electrical signal from the optical coherent detecting unit; and
a reception side digital signal processing unit including a frequency shifting unit to perform coarse compensation of shifting a center frequency of the digital signal obtained by the analog-to-digital converting unit to a frequency that reduces a frequency difference between transmission and reception, and a frequency difference estimating and compensating unit to perform precise compensation on the center frequency of the digital signal subjected to the coarse compensation of the frequency difference by the frequency shifting unit.

2. The optical receiver according to claim 1, wherein
the modulated light includes a light signal modulated to an I signal and a Q signal of quadrature phases, and
the analog-to-digital converting unit and the reception side digital signal processing unit perform signal processing on the I signal and the Q signal individually.

3. The optical receiver according to claim 1 or 2, wherein the coarse compensation of the frequency difference by the frequency shifting unit is performed by shifting the center frequency of the digital signal obtained by the analog-to-digital converting unit in such a way that, at a time of deviation from an allowable range of an estimation value of the frequency difference between the transmission and the reception in which the frequency difference estimating and compensating unit can allow the precise compensation, the estimation value of the frequency difference between the transmission and the reception falls within the allowable range.

4. The optical receiver according to claim 3, wherein the coarse compensation of the frequency difference by the frequency shifting unit is performed by shifting stepwise the center frequency of the digital signal obtained by the analog-to-digital converting unit in such a way that quality of a waveform of a demodulated signal obtained by the frequency difference estimating and compensating unit does not change.

5. The optical receiver according to claim 1 or 2, wherein the coarse compensation of the frequency difference by the frequency shifting unit is performed by the frequency shifting unit by shifting the center frequency of the digital signal obtained by the analog-to-digital converting unit on a basis of shift amount setting information indicating a shift amount of a frequency and obtained from an outside of the reception side digital signal processing unit in such a way that the estimation value of the frequency difference between the transmission and the reception falls within an allowable range.

6. The optical receiver according to claim 5, wherein the shift amount setting information is information indicating a Doppler shift amount estimated on a basis of satellite orbit information or a carrier frequency of another optical transmitter.

7. The optical receiver according to claim 1 or 2, wherein the coarse compensation of the frequency difference by the frequency shifting unit is performed by the frequency shifting unit, at a time of initial setting, by shifting the center frequency of the digital signal obtained by the analog-to-digital converting unit on a basis of shift amount setting information indicating a shift amount of a frequency and obtained from an outside of the reception side digital signal processing unit in such a way that the estimation value of the frequency difference between the transmission and the reception falls within an allowable range, and is performed, during an operation, by shifting the center frequency of the digital signal obtained by the analog-to-digital converting unit in such a way that, at a time of deviation from the allowable range of the estimation value of the frequency difference between the transmission and the reception in which the frequency difference estimating and compensating unit can allow the precise compensation, the estimation value of the frequency difference between the transmission and the reception falls within the allowable range.

8. The optical receiver according to claim 1 or 2, wherein the coarse compensation of the frequency difference by the frequency shifting unit is performed by adding a first shift amount to a second shift amount at a time of deviation from an allowable range of an estimation value of the frequency difference between the transmission and the reception in which the frequency difference estimating and compensating unit can allow the precise compensation, and shifting the center frequency of the digital signal obtained by the analog-to-digital converting unit, the first shift amount being indicated by shift amount setting information that is information indicating a Doppler shift amount estimated on a basis of satellite orbit information from an outside of the reception side digital signal processing unit or a carrier frequency of another optical transmitter, and the second shift amount reducing the frequency difference between the transmission and the reception.

9. The optical receiver according to claim 1 or 2, wherein
the modulated light received by the optical coherent detecting unit is modulated light obtained by modulating data information with a plurality of different subcarrier signals, and
the reception side digital signal processing unit includes the frequency shifting unit and the frequency difference estimating and compensating unit so as to correspond to each of the plurality of different subcarrier signals.

10. An optical reception method in an optical receiver including an optical coherent detecting unit, an analog-to-digital converting unit, and a reception side digital signal processing unit including a frequency shifting unit and a frequency difference estimating and compensating unit, the optical reception method comprising steps of:
by the frequency shifting unit, performing coarse compensation of a frequency difference between transmission and reception, the performance including maintaining a shift amount of a center frequency of a digital signal when the frequency difference between the transmission and the reception falls within an allowable range, the digital signal being obtained by the analog to-digital converting unit by performing analog-to-digital conversion on an analog electrical signal obtained by causing modulated light optically modulated by the optical coherent detecting unit at a carrier wave frequency to interfere with interference light, and performing coherent detection on the analog electrical signal, and, when the frequency difference between the transmission and the reception deviates from the allowable range, updating the shift amount of the center frequency of the digital signal obtained by the analog-to-digital converting unit; and
by the frequency difference estimating and compensating unit, performing precise compensation on the center frequency of the digital signal subjected to the coarse compensation of the frequency difference between the transmission and the reception.

11. An optical reception program causing a computer to execute:
a procedure of performing coarse compensation of a frequency difference between transmission and reception, the procedure including a procedure of maintaining a shift amount of a center frequency of a digital signal when the frequency difference between the transmission and the reception falls within an allowable range, the digital signal being obtained by performing analog-to-digital conversion on an analog electrical signal obtained by performing coherent detection by causing modulated light optically modulated at a carrier wave frequency to interfere with interference light, and a procedure of, when the frequency difference between the transmission and the reception deviates from the allowable range, updating the shift amount of the center frequency of the digital signal obtained; and
a procedure of performing precise compensation on the center frequency of the digital signal subjected to the coarse compensation of the frequency difference between the transmission and the reception.

12. A recording medium having a program stored thereon, the program causing a computer to execute:
a procedure of performing coarse compensation of a frequency difference between transmission and reception, the procedure including a procedure of maintaining a shift amount of a center frequency of a digital signal when the frequency difference between the transmission and the reception falls within an allowable range, the digital signal being obtained by performing analog-to-digital conversion on an analog electrical signal obtained by performing coherent detection by causing modulated light optically modulated at a carrier wave frequency to interfere with interference light, and a procedure of, when the frequency difference between the transmission and the reception deviates from the allowable range, updating the shift amount of the center frequency of the digital signal obtained; and
a procedure of performing precise compensation on the center frequency of the digital signal subjected to the coarse compensation of the frequency difference between the transmission and the reception.
